# FASCICULE DE BREVET EUROPEEN

(11) **EP 2 349 687 B1**
(45) Date de publication et mention de la délivrance du brevet: **14.11.2012**
(21) Numéro de dépôt: 09797096.6
(22) Date de dépôt: 26.11.2009
(51) Int. Cl.: B29C 70/22, C04B 35/83

(54) **PROCEDE DE FABRICATION DE PIECE DE FORME COMPLEXE EN MATERIAU COMPOSITE**
VERFAHREN ZUR HERSTELLUNG EINES KOMPLEX GEFORMTEN VERBUNDMATERIALTEILS
METHOD FOR MANUFACTURING A COMPLEXLY SHAPED COMPOSITE MATERIAL PART

(30) Priorité: 28.11.2008 FR 0858098
(43) Date de publication de la demande: 03.08.2011
(73) Titulaire: Snecma Propulsion Solide, 33187 Le Haillan Cedex (FR); Snecma, 75015 Paris (FR)
(72) Inventeur: EBERLING-FUX, Nicolas, F-33140 Villenave d'Ornon (FR); BOUILLON, Eric, F-33185 Le Haillan (FR); ROUSSILLE, Clément, F-33200 Bordeaux (FR); OTIN, Nicolas, F-75014 Paris (FR); COUPE, Dominique, F-33160 Le Haillan (FR)
(74) Mandataire: Joly, Jean-Jacques
(86) Numéro de dépôt international: PCT/FR2009/052308
(87) Numéro de publication internationale: WO 2010/061139

(56) Documents cités:
- WO-A-97/33829
- FR-A- 2 640 258
- FR-A- 2 852 004
- GB-A- 830 436
- JP-A- 2003 148 105
- US-A- 5 350 545

## Description

### Arrière-plan de l'invention

L'invention concerne la fabrication de pièces de forme complexe en matériau composite.

Un exemple d'application de l'invention est la fabrication de pièces en matériau composite thermostructural utilisées dans les domaines aéronautique et spatial.

De façon bien connue, la fabrication d'une pièce en matériau composite thermostructural comprend la réalisation d'une préforme fibreuse en fibres réfractaires (carbone ou céramique) ayant une forme proche de celle de la pièce à fabriquer et la densification de la préforme fibreuse par une matrice réfractaire (carbone ou céramique).

Pour la réalisation de la préforme fibreuse, différentes techniques textiles peuvent être utilisées. Une technique connue consiste à réaliser une préforme par tissage tridimensionnel, ou tissage multicouches. Un tel mode de tissage permet d'avoir des liaisons entre couches de fils pour donner à la préforme la tenue nécessaire pour obtenir une pièce en matériau composite ayant des propriétés mécaniques élevées.

Dans le cas de pièces de forme complexe, la réalisation d'une préforme fibreuse directement par tissage tridimensionnel (3D) peut s'avérer difficile, voire impossible.

On peut alors réaliser la préforme fibreuse en plusieurs parties séparées qui sont assemblées, par exemple par couture ou implantation de fils, avant densification de la préforme. Mais les liaisons entre les différentes parties de la préforme peuvent constituer des points de faiblesse.

Il est connu aussi de réaliser par tissage 3D une ébauche fibreuse à partir de laquelle la préforme fibreuse est obtenue par mise en forme de l'ébauche. La mise en forme de l'ébauche peut comprendre le dépliage ou repliage d'une ou plusieurs parties de l'ébauche adjacentes à des zones de déliaison ménagées lors du tissage ou à des découpes ou incisions pratiquées dans l'ébauche.

Le maintien de la préforme fibreuse dans la forme voulue est réalisé par consolidation, par voie liquide ou par voie gazeuse. La consolidation par voie liquide comprend une imprégnation de la préforme par une composition de consolidation contenant une résine et traitement thermique pour réticulation et pyrolyse de la résine. La quantité de résine est choisie pour que le résidu de pyrolyse réalise une densification suffisante permettant à la préforme de conserver sa forme sans l'assistance d'outillage de maintien. La consolidation par voie gazeuse comprend une densification partielle de la préforme par dépôt sur les fibres d'un matériau obtenu par infiltration chimique en phase gazeuse, la quantité de matériau déposé étant choisie de façon suffisante pour lier entre elles les fibres de la préforme afin que celle-ci conserve sa forme sans l'assistance d'outillage de maintien. La préforme consolidée est ensuite densifiée par une matrice réfractaire.

Un procédé de réalisation de pièces en CMC de forme complexe par consolidation au moyen d'une résine précurseur de céramique d'une préforme fibreuse faite de matériau tissé ou tressé, puis densification de la préforme consolidée, par infiltration chimique en phase gazeuse est décrit dans le document US 5 350 545.

En outre, en particulier mais non exclusivement pour des matériaux composites à matrice céramique (CMC), la formation d'une interphase sur les fibres permet d'éviter une adhérence trop forte sur les fibres du résidu de pyrolyse de résine, dans le cas d'une consolidation par voie liquide, et permet, également dans le cas d'une consolidation par voie gazeuse, de diminuer fortement la sensibilité à la fissuration et d'accroître la tenue aux chocs.

De plus, il peut être souhaitable, notamment lorsque les fibres utilisées sont des fibres céramiques du commerce, de réaliser sur les fibres, avant formation d'une interphase et consolidation, un traitement d'élimination d'un ensimage ou d'un film d'oxyde présent à la surface des fibres.

Ces différentes opérations nécessitent de multiples manipulations qui accroissent la complexité et le coût de la fabrication des pièces.

On connaît par ailleurs du document WO 97/33829 un procédé de fabrication de soupapes en composite carbone/carbone comprenant la réalisation d'une préforme tressée. Une tresse continue peut être réalisée avec mise en place régulière d'inserts en carbone à l'intérieur de la tresse pour obtenir des préformes de soupapes par découpe de segments dans la tresse formée avec les inserts.

### Objet et résumé de l'invention

La présente invention vise à proposer un procédé permettant de rationaliser la fabrication de pièces de formes complexes en matériau composite comprenant un renfort fibreux densifié par une matrice, dans lesquelles le renfort fibreux est un renfort tissé 3D.

Ce but est atteint selon l'invention par un procédé comportant les étapes de :
- tissage tridimensionnel d'une bande fibreuse continue comprenant une succession d'ébauches fibreuses de préformes d'une pluralité de pièces à fabriquer,
- découpe ensuite dans la bande d'ébauches fibreuses individuelles, chaque ébauche étant en une seule pièce,
- mise en forme d'une ébauche découpée pour obtenir une préforme fibreuse en une seule pièce ayant une forme voisine de celle d'une pièce à fabriquer,
- consolidation de la préforme dans la forme voulue, et
- densification de la préforme consolidée par formation d'une matrice par infiltration chimique en phase gazeuse.

Avantageusement, un traitement de surface est réalisé sur les fibres de la bande fibreuse tissée comprenant au moins l'une des opérations suivantes : désensimage des fibres et traitement acide des fibres.

Selon un premier mode de réalisation, avant découpe des ébauches fibreuses individuelles, la bande fibreuse tissée est imprégnée par une composition liquide de consolidation comprenant une résine, et la consolidation est effectuée par réticulation et pyrolyse de la résine.

Avantageusement, avant imprégnation de la bande fibreuse, une couche d'interphase fibres-matrice est formée sur les fibres de la bande fibreuse tissée, la couche d'interphase étant en un matériau choisi parmi le carbone pyrolytique PyC, le nitrure de bore BN et le carbone dopé au bore BC. La couche d'interphase a une épaisseur de préférence au plus égale à 100 nanomètres afin de préserver la capacité de déformation de l'ébauche fibreuse.

Après imprégnation par la composition de consolidation et avant découpe des ébauches, une pré-réticulation de la résine de consolidation peut être réalisée. Une telle pré-réticulation ou réticulation partielle peut apporter une raideur donc une tenue supplémentaire à l'ébauche fibreuse.

Lorsqu'une couche mince d'interphase fibres-matrice a été formée avant imprégnation de la bande, une couche supplémentaire d'interphase peut être formée après obtention de la préforme consolidée et avant densification par la matrice.

Avantageusement alors, la couche supplémentaire d'interphase est réalisée par infiltration chimique en phase gazeuse et la formation de la couche supplémentaire d'interphase et la densification sont réalisées de façon enchaînée dans un four.

La mise en forme de l'ébauche fibreuse peut être réalisée dans un moule dans lequel la réticulation et la pyrolyse de la résine de consolidation sont réalisées de façon enchaînée.

En variante, la pyrolyse de la résine est réalisée lors d'une montée en température effectuée en vue d'une opération d'infiltration chimique en phase gazeuse.

Selon un autre mode de réalisation du procédé, la consolidation est effectuée par densification partielle par infiltration chimique en phase gazeuse de la préforme maintenue dans la forme voulue.

Avantageusement, dans cet autre mode de réalisation, avant consolidation et après mise en forme, un revêtement d'interphase fibres-matrice est formé sur les fibres de la préforme, le revêtement d'interphase étant en un matériau choisi parmi le carbone pyrolytique-Pyc, le nitrure de bore BN et le carbone dopé au bore BC. Le revêtement d'interphase a une épaisseur d'environ une à quelques centaines de nanomètres.

Selon une particularité du procédé, la densification comprend deux étapes séparées par une opération d'usinage de la préforme partiellement densifiée.

Selon une autre particularité du procédé, avant densification par infiltration chimique en phase gazeuse, un pré-usinage est réalisé sur la préforme consolidée.

La bande tissée peut comprendre plusieurs rangées d'ébauches fibreuses, lesquelles rangées s'étendent dans la direction longitudinale de la bande.

Avantageusement, la bande est tissée avec des zones de sur-longueur en chaîne et en trame tout autour des ébauches fibreuses.

Ainsi le procédé selon l'invention est remarquable en ce que les opérations qui précèdent la mise en forme d'une ébauche fibreuse sont réalisées sur une bande tissée 3D continue qui est facile à manipuler et permet de traiter simultanément une pluralité d'ébauches. Il en résulte un avantage significatif pour la fabrication d'une série importante de pièces similaires.

Le procédé selon l'invention convient en particulier mais non exclusivement pour la réalisation de pièces de formes complexes en matériau composite à matrice céramique.

Une application particulière est la fabrication d'aube de turbomachine. La bande est alors avantageusement tissée avec une succession d'ébauches fibreuses aptes, après mise en forme, à constituer des préformes fibreuses qui constituent chacune une préforme en une seule pièce d'au moins une pale et un pied d'aube, les ébauches fibreuses étant tissées avec leur direction longitudinale correspondant à celle des aubes à fabriquer s'étendant en sens trame ou en sens chaîne.

### Brève description des dessins

L'invention sera mieux comprise à la lecture de la description faite ci-après, à titre indicatif mais non limitatif, en référence aux dessins annexés sur lesquels :
- la figure 1 indique les étapes successives d'un premier mode de mise en oeuvre du procédé selon l'invention ;
- la figure 2 indique les étapes successives d'un deuxième mode de mise en oeuvre du procédé selon l'invention ;
- la figure 3 est une vue en perspective d'une aube de turbomachine à plateforme et talon intégrés ;
- la figure 4 illustre de façon très schématique la disposition de deux ensembles de couches de fils dans une ébauche fibreuse tissée tridimensionnelle destinée à la réalisation d'une préforme fibreuse pour une aube telle que celle illustrée par la figure 3 ;
- les figures 5, 6 et 7 illustrent des étapes successives de réalisation d'une préforme fibreuse pour une aube telle qu'illustrée par la figure 3, à partir de l'ébauche fibreuse de la figure 4 ;
- la figure 8 est une vue en coupe montrant le profil, mis à plat, d'une aube telle que celle de la figure 3;
- la figure 9 est une vue en coupe d'un ensemble de couches de fils de chaîne permettant d'obtenir un profil tel que celui de la figure 8;
- les figures 10A et 10B sont des vues en coupe chaîne montrant un mode de tissage de l'ébauche fibreuse de la figure 4 ;
- la figure 11 est une vue partielle en coupe selon un plan parallèle aux directions chaîne et trame dans une partie de l'ébauche fibreuse de la figure 4 correspondant à l'emplacement de jonction entre pale et plateforme d'aube ;
- la figure 12 est une vue partielle en coupe trame dans une partie de l'ébauche fibreuse de la figure 4 correspondant à l'emplacement de jonction entre pale et talon d'aube ;
- la figure 13A est une vue en coupe trame montrant un exemple de disposition de fils de trame dans une partie d'ébauche fibreuse correspondant à une partie de pied d'aube ;
- les figures 13B, 13C et 13D sont des vues en coupe trame montrant des plans de chaîne pour un exemple de tissage tridimensionnel (multicouches) dans la partie d'ébauche fibreuse de la figure 10A ;
- la figure 14 est une vue schématique partielle en coupe montrant un autre mode de réalisation d'une partie correspondant à un pied d'aube ;
- les figures 15 et 16 illustrent très schématiquement deux modes de réalisation d'une bande fibreuse tissée obtenue par tissage tridimensionnel comprenant une pluralité d'ébauches fibreuses telles que celle de la figure 4 ;
- la figure 17 est une vue en perspective d'un volet orientable chaud de tuyère d'un moteur d'avion à turbine à gaz à post-combustion ;
- la figure 18 illustre de façon très schématique la disposition de couches de fils dans une ébauche fibreuse tissée 3D destinée à la réalisation d'une préforme fibreuse pour un corps d'un volet tel que celui illustré par la figure 17;
- les figures 19 et 20 illustrent des étapes successives de réalisation d'une préforme fibreuse pour un corps de volet tel que celui illustré par la figure 17, à partir de l'ébauche fibreuse de la figure 18 ;
- les figures 21A et 21B sont des vues en coupe partielles à échelle agrandie d'un ensemble de couches de fils formant l'ébauche de la figure 18 ; et
- les figures 22 et 23 illustrent très schématiquement deux modes de réalisation d'une bande fibreuse tissée 3D comprenant une pluralité d'ébauches fibreuses telles que celle de la figure 18.

### Description détaillée de modes de réalisation

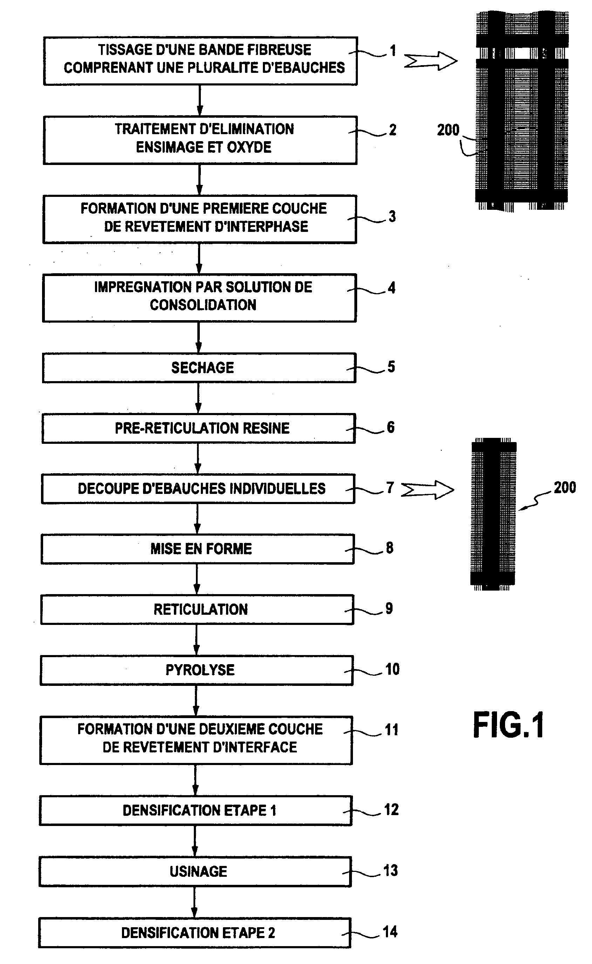

Des étapes successives d'un procédé de fabrication d'une pièce en matériau composite selon un premier mode de mise en oeuvre du procédé selon l'invention sont indiquées sur la figure 1.

On considérera dans cet exemple la réalisation d'une pièce en matériau composite à matrice céramique (CMC) comprenant un renfort fibreux en fibres de céramique densifié par une matrice céramique.

A l'étape 1, une bande fibreuse est tissée par tissage 3D comprenant au moins une rangée d'ébauches fibreuses 200. Les ébauches fibreuses peuvent avoir des directions longitudinales orientées en sens chaîne, c'est-à-dire dans la direction longitudinale de la bande, comme illustré, ou, en variante, orientées en sens trame. Des modes de réalisation d'ébauches fibreuses pour la fabrication de différentes pièces sont décrits plus loin en détail. Les fibres céramique sont par exemple des fibres SiC, le tissage étant alors réalisé à partir de fils de fibres SiC tels que par exemple fournis sous la dénomination "Nicalon" par la société japonaise Nippon Carbon.

A l'étape 2, la bande fibreuse est traitée pour éliminer l'ensimage présent sur les fibres et la présence d'oxyde à la surface des fibres. L'élimination de l'oxyde est obtenue par traitement acide, notamment par immersion dans un bain d'acide fluorhydrique. Un traitement préalable d'élimination de l'ensimage est réalisé, par exemple par décomposition de l'ensimage par bref traitement thermique.

A l'étape 3, une couche mince de revêtement d'interphase est formé sur les fibres de la bande fibreuse par infiltration chimique en phase gazeuse ou CVI ("Chemical Vapor Infiltration"). Le matériau du revêtement d'interphase est par exemple du carbone pyrolytique ou pyrocarbone (PyC), du nitrure de bore (BN) ou du carbone dopé au bore (BC avec par exemple de 5%art à 20%at de B, le complément étant C). La couche mince de revêtement d'interphase est de préférence de faible épaisseur, par exemple au plus égale à 100 nanomètres, voire au plus égale à 50 nanomètres, de manière à conserver une bonne capacité de déformation des ébauches fibreuses. De préférence, l'épaisseur est au moins égale à 10 nanomètres.

A l'étape 4, la bande fibreuse avec les fibres revêtues d'une mince couche de revêtement d'interphase est imprégnée par une composition de consolidation, typiquement une résine éventuellement diluée dans un solvant. On peut utiliser une résine précurseur de carbone, par exemple une résine phénolique ou furanique, ou une résine précurseur de céramique, par exemple une résine polysilazane, polysiloxane ou polycarbosilane précurseurs de SiCN, SiCO et SiC.

Après séchage par élimination du solvant éventuel de la résine (étape 5), une pré-réticulation de la résine peut être effectuée (étape 6). La pré-réticulation, ou réticulation incomplète permet d'accroître la raideur, donc la tenue, tout en laissant la capacité de déformation nécessaire pour la réalisation de préformes par conformation des ébauches.

A l'étape 7, les ébauches fibreuses individuelles 200 sont découpées

A l'étape 8, une ébauche fibreuse ainsi découpée est mise en forme et placée dans un moule, ou conformateur, par exemple en graphite pour conformation afin d'obtenir une préforme ayant une forme complexe voisine de celle d'une pièce en matériau composite à fabriquer.

Ensuite, la réticulation de la résine est achevée (étape 9) et la résine réticulée est pyrolysée (étape 10). La réticulation et la pyrolyse peuvent être enchaînées par élévation progressive de la température dans le moule.

Après pyrolyse, on obtient une préforme fibreuse consolidée par le résidu de pyrolyse. La quantité de résine de consolidation est choisie pour que le résidu de pyrolyse lie les fibres de la préforme de façon suffisante pour que celle-ci soit manipulable en conservant sa forme sans l'assistance d'un outillage, étant noté que la quantité de résine de consolidation est de préférence choisie aussi faible que possible.

Des étapes d'élimination d'ensimage, de traitement acide et de formation de revêtement d'interphase pour un substrat en fibres SiC sont connues. On pourra se référer au document U55 071 679.

Une deuxième couche d'interphase peut être formée par CVI (étape 11) si nécessaire pour obtenir globalement une interphase fibres-matrice ayant une épaisseur suffisante pour assurer une fonction de défragilisation du matériau composite. La deuxième couche d'interphase peut être en matériau choisi parmi PyC, BN, BC, pas nécessairement le même que celui de la première couche d'interphase. Comme cela est connu, de tels matériaux d'interphase sont capables d'assurer une relaxation de contraintes au fond de fissures qui parviennent à l'interphase à travers la matrice du matériau composite et ainsi éviter ou retarder une propagation des fissures à travers les fibres avec rupture de celles-ci, rendant le matériau composite moins fragile. L'épaisseur de la deuxième couche d'interphase est de préférence au moins égale à 100 nanomètres.

La réalisation d'une interphase en deux couches, comme indiquée ci-avant est préférée. Elle est décrite dans la demande de brevet FR 2933970. La première couche d'interphase contribue à éviter une adhérence trop forte du résidu de pyrolyse de la résine de consolidation sur les fibres.

Une densification par une matrice céramique de la préforme consolidée est ensuite réalisée. On peut réaliser cette densification par CVI auquel cas la formation de la deuxième couche d'interphase et la densification par la matrice céramique peuvent être enchaînées dans un même four.

La densification par CVI d'une préforme par une matrice céramique, notamment une matrice SiC, est bien connue. Une phase gazeuse réactionnelle contenant du méthyltrichlorosilane (MTS) et du gaz hydrogène (H₂) peut être utilisée. La préforme consolidée est placée dans l'enceinte, sans l'aide d'outillage de maintien de sa forme et la phase gazeuse est introduite dans l'enceinte. Dans des conditions contrôlées notamment de température et de pression, la phase gazeuse diffuse dans la porosité de la préforme pour former le dépôt de matrice SiC par réaction entre ses constituants.

Bien entendu, selon la nature du matériau composite souhaité, le procédé peut être mis en oeuvre à partir d'une bande fibreuse en fibres autres qu'en céramique, par exemple en fibres de carbone. Le traitement acide d'élimination de couche d'oxyde à l'étape 10 est alors omis.

De même, la densification par CVI de la préforme consolidée peut être réalisée par une matrice autre que SiC, notamment une matrice de carbone ou une matrice auto-cicatrisante, des exemples de phases de matrice auto-cicatrisantes étant un système ternaire Si-B-C ou du carbure de bore B₄C. On pourra se référer aux documents US 5 246 736 et US 5 965 266 qui décrivent l'obtention par CVI de telles matrices auto-cicatrisantes.

La densification peut être réalisée en deux étapes successives (étapes 12 et 14) séparées par une étape 13 d'usinage aux dimensions désirées de la pièce à fabriquer. La deuxième étape de densification permet non seulement de compléter la densification à coeur du matériau composite mais aussi de former un revêtement de surface sur les fibres éventuellement mises à nu pendant l'usinage.

On notera qu'un pré-usinage, ou détourage, peut être réalisé entre les étapes 9 et 10, c'est-à-dire après réticulation et avant pyrolyse de la résine.

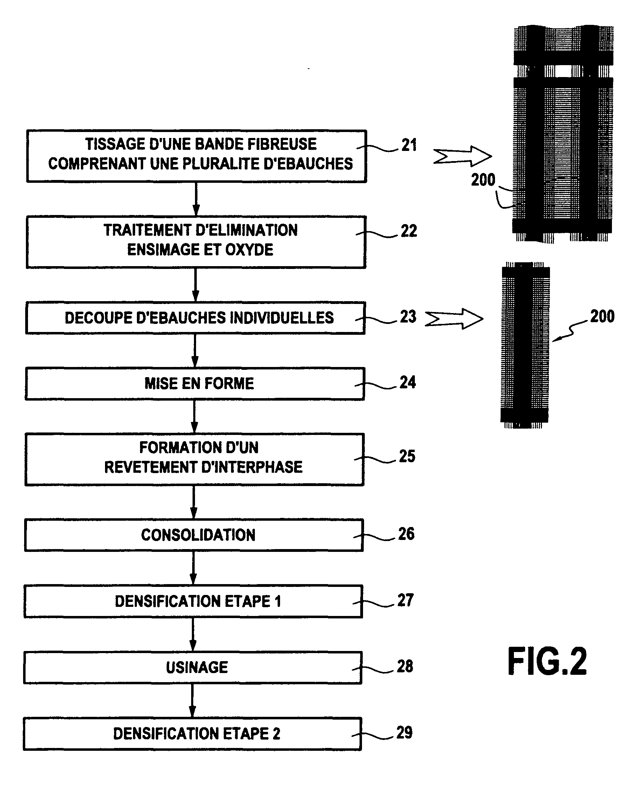

Des étapes successives d'un procédé de fabrication d'une pièce en matériau composite selon un deuxième mode de mise en oeuvre du procédé de l'invention sont indiquées sur la figure 2.

L'étape 21 de tissage tridimensionnel d'une bande fibreuse comprenant une pluralité d'ébauches fibreuses 200 et l'étape 22 de traitement d'élimination d'ensimage et d'oxyde sont semblables aux étapes 1 et 2 du mode de réalisation de la figure 1.

A l'étape 23, des ébauches fibreuses individuelles sont découpées dans la bande fibreuse, puis chaque ébauche fibreuse individuelle est mise en forme dans un moule ou conformateur (étape 24) pour obtenir une préforme fibreuse ayant la forme complexe voulue.

A l'étape 25, un revêtement d'interphase de défragilisation est formé par CVI sur les fibres de la bande fibreuse. Le matériau du revêtement d'interphase est par exemple PyC, BN ou BC, comme précédemment mentionné. L'épaisseur du revêtement d'interphase est d'environ une à quelques centaines de nanomètres.

La préforme étant maintenue en forme dans le conformateur, une consolidation de la préforme par densification partielle est réalisée (étape 26), la consolidation étant réalisée par formation de dépôt céramique sur les fibres par CVI.

La formation du revêtement d'interphase par CVI et la consolidation par dépôt céramique par CVI peuvent être enchaînées dans un même four CVI.

Le conformateur est de préférence en graphite et présente des trous facilitant le passage de la phase gazeuse réactionnelle donnant le dépôt d'interphase et le dépôt céramique par CVI.

Lorsque la consolidation est suffisante pour que la préforme puisse être manipulée tout en conservant sa forme sans assistance d'outillage de maintien, la préforme consolidée est extraite du conformateur et la densification par une matrice céramique par CVI est réalisée. La densification peut être réalisée en deux étapes successives (étapes 27 et 29) séparées par une étape 28 d'usinage aux dimensions désirées de la pièce à fabriquer.

Dans ce qui précède, on a envisagé la formation du revêtement d'interphase à l'étape 23 sur les fibres de la bande fibreuse, avant découpe des ébauches 200. En variante, le revêtement d'interphase peut être formé après mise en forme de la préforme (étape 25) et avant consolidation (étape 26). La formation du revêtement d'interphase par CVI et la consolidation par dépôt céramique par CVI peuvent alors être enchaînées dans un même four CVI. En procédant ainsi, on peut former un revêtement d'interphase dont l'épaisseur n'est pas limitée pour laisser une capacité de déformation pour former la préforme.

### Exemple 1 : Fabrication d'aubes de turbomachine en matériau CMC à plate-forme et/ou talon intégré.

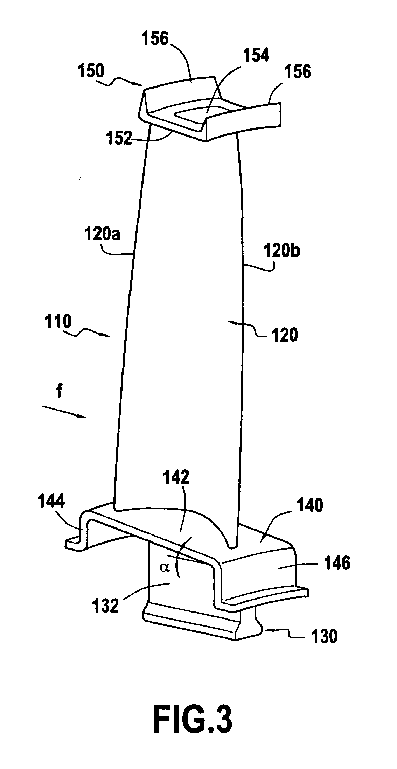

Le procédé de l'invention peut être utilisé pour fabriquer différents types d'aubes de turbomachine, par exemple des aubes de roue mobile de turbine basse pression, aubes ayant une plate-forme et un talon intégrés, comme l'aube 110 illustrée par la figure 3.

L'aube 110 de la figure 3 comprend de façon en soi bien connue, une pale 120, un pied 130 formé par une partie de plus forte épaisseur, par exemple à section en forme de bulbe, prolongé par une échasse 132, une plateforme intérieure 140 située entre le pied 130 et la pale 120 et une plateforme extérieure ou talon 150 au voisinage de l'extrémité libre de la pale.

La pale 120 s'étend en direction longitudinale entre la plateforme 140 et le talon 150 et présente en section transversale un profil incurvé d'épaisseur variable entre son bord d'attaque 120a et son bord de fuite 120b.

L'aube 110 est montée sur un rotor de turbine (non illustré) par engagement du pied 130 dans un logement de forme correspondante aménagé à la périphérie du rotor. Le pied 130 se prolonge par l'échasse 132 pour se raccorder à la face interne (ou inférieure) de la plateforme 140.

A son extrémité radiale interne, la pale 120 se raccorde à la plateforme 140 sur une face externe (ou supérieure) 142 de la plateforme qui délimite, à l'intérieur, la veine d'écoulement de flux gazeux dans la turbine. Dans ses parties d'extrémité amont et aval (dans le sens f d'écoulement du flux gazeux), la plateforme se termine par des becquets 144, 146. Dans l'exemple illustré, la face 142 de la plateforme est inclinée en formant globalement un angle non nul α par rapport à la normale à la direction longitudinale de l'aube. Selon le profil souhaité de la surface intérieure de la veine d'écoulement du flux gazeux, l'angle α pourrait être nul, ou la face 142 pourrait avoir un profil globalement non rectiligne, par exemple incurvé.

A son extrémité radiale externe, la pale se raccorde au talon 150 sur une face interne (inférieure) 152 du talon qui délimite, à l'extérieur, la veine d'écoulement du flux gazeux. Du côté externe (supérieur), le talon délimite une dépression ou baignoire 154. Le long des bords amont et aval de la baignoire 154, le talon porte des lèchettes 156 à profil en forme de dents dont les extrémités peuvent à pénétrer dans une couche de matériau abradable d'un anneau de turbine (non représenté) pour réduire le jeu entre le sommet d'aube et l'anneau de turbine. Dans l'exemple illustré, la face 152 du talon s'étend sensiblement perpendiculairement à la direction longitudinale de l'aube. En variante, selon le profil souhaité de la surface extérieure de la veine d'écoulement de flux gazeux, la face 152 pourrait être inclinée en formant globalement un angle non nul par rapport à la normale à la direction longitudinale de l'aube ou la face 152 pourrait avoir un profil globalement non rectiligne, par exemple incurvé.

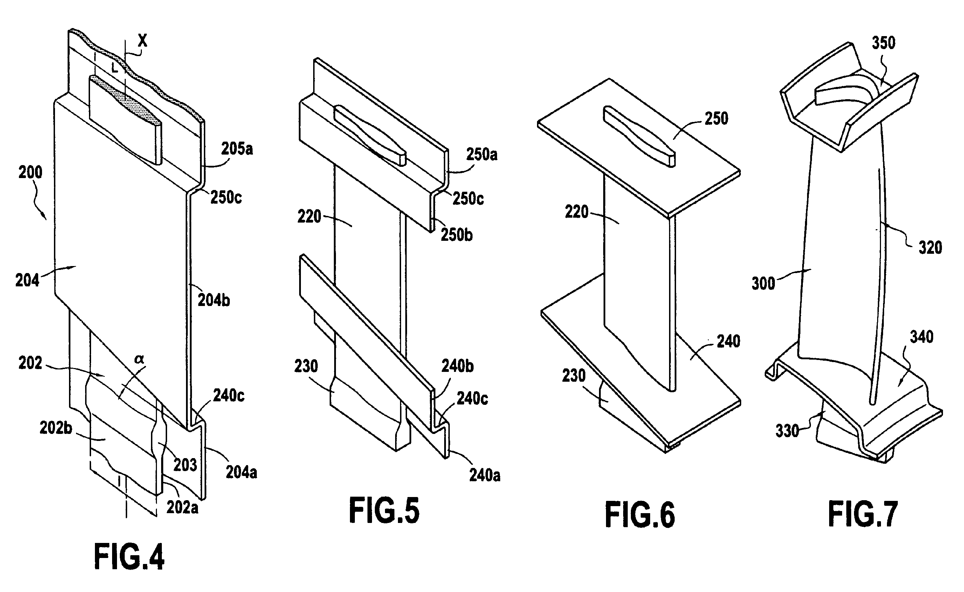

La figure 4 montre très schématiquement une ébauche fibreuse 200 à partir de laquelle une préforme fibreuse d'aube peut être mise en forme afin, après densification par une matrice et usinage éventuel, d'obtenir une aube en matériau composite à plateforme et talon intégrés telle que celle illustrée par la figure 3. Une seule ébauche 200 est montrée sur la figure 4, étant noté qu'une succession de telles ébauches sont tissées de façon continue dans une bande fibreuse comme déjà mentionné et encore précisé plus loin.

L'ébauche 200 comprend deux parties 202, 204 obtenues par tissage tridimensionnel ou tissage multicouches, seules les enveloppes de ces deux parties étant représentées sur la figure 4. La partie 202 est destinée, après mise en forme, à constituer une partie de préforme fibreuse d'aube correspondant à une préforme de pale et pied d'aube. La partie 204 est destinée, après mise en forme, à constituer les parties de préforme fibreuse d'aube correspondant à des préformes de plateforme et talon d'aube.

Les deux parties 202, 204 sont sous forme de bandes s'étendant de façon générale dans une direction correspondant à la direction longitudinale X de l'aube à réaliser. La bande fibreuse 202 présente, dans sa partie destinée à former une préforme de pale, une épaisseur variable déterminée en fonction de l'épaisseur de profil de la pale de l'aube à réaliser. Dans sa partie destinée à former une préforme de pied, la bande fibreuse 202 présente une surépaisseur 203 déterminée en fonction de l'épaisseur du pied de l'aube à réaliser.

La bande fibreuse 202 a une largeur I choisie en fonction de la longueur du profil développé (à plat) de la pale et du pied de l'aube à réaliser tandis que la bande fibreuse 204 a une largeur L supérieure à I choisie en fonction des longueurs développées de la plateforme et du talon de l'aube à réaliser.

La bande fibreuse 204 est d'épaisseur sensiblement constante déterminée en fonction des épaisseurs de plateforme et de talon de l'aube à réaliser. La bande 204 comprend une première partie 204a qui s'étend le long et au voisinage d'une première face 202a de la bande 202, une deuxième partie 204b qui s'étend le long et au voisinage de la deuxième face 202b de la bande 202 et une troisième partie 205a qui s'étend le long et au voisinage de la première face 202a de la bande 202.

Les parties 204a et 204b se raccordent par une partie de raccordement 240c qui s'étend transversalement par rapport à la bande 202 à un emplacement correspondant à celui de la plateforme de l'aube à réaliser. La partie de raccordement 240c traverse la bande 202 en formant un angle α par rapport à la normale à la direction longitudinale de l'ébauche fibreuse. Les parties 204b et 205a se raccordent par une partie de raccordement 250c qui s'étend transversalement par rapport à la bande 202 à un emplacement correspondant à celui du talon de l'aube à réaliser. Dans l'exemple représenté, la partie de raccordement 250c traverse la bande 202 sensiblement perpendiculairement à la direction longitudinale de l'ébauche fibreuse. Selon la géométrie souhaitée au niveau du talon de l'aube, la partie de raccordement 250c pourra traverser la bande 202 en formant un angle non nul par rapport à la normale à la direction longitudinale de l'ébauche, comme pour la plateforme. En outre, le profil de la partie de raccordement 240c et/ou celui de la partie de raccordement 250c pourra être curviligne au lieu d'être rectiligne comme dans l'exemple illustré.

Comme décrit plus en détail plus loin, les bandes 202 et 204 sont tissées simultanément par tissage tridimensionnel mais sans liaison entre la bande 202 et les parties 204a 204b et 205a de la bande 204, et en tissant une pluralité d'ébauches 200 successives de façon continue dans la direction X.

Les figures 5 à 7 montrent très schématiquement comment une préforme fibreuse ayant une forme proche de celle de l'aube à fabriquer peut être obtenue à partir de l'ébauche fibreuse 200.

La bande fibreuse 202 est coupée à une extrémité dans la surépaisseur 203 et à une autre extrémité un peu au-delà de la partie de raccordement 250a pour avoir une bande 220 de longueur correspondant à la dimension longitudinale de l'aube à fabriquer avec une partie renflée 230 formée par la surépaisseur 203 et située à un emplacement correspondant à la position du pied de l'aube à fabriquer.

En outre, des découpes sont pratiquées aux extrémités des parties 204a, 205a de la bande 204 et dans la partie 204b de celle-ci pour laisser subsister des tronçons 240a et 240b de part et d'autre de la partie de raccordement 240c et des tronçons 250a et 250b de part et d'autre de la partie de raccordement 250c, comme le montre la figure 5. Les longueurs des tronçons 240a 240b et 250a, 250b sont déterminées en fonction des longueurs de plateforme et de talon dans l'aube à fabriquer.

Du fait de la déliaison entre la bande 202 de l'ébauche fibreuse, d'une part, et les parties 204a, 204b et 205a d'autre part, les tronçons 240a 240b 250a et 250b peuvent être rabattus perpendiculairement à la bande 202 sans couper de fils pour former des plateaux 240, 250, comme montré par la figure 6.

Une préforme fibreuse 300 de l'aube à fabriquer est ensuite obtenue par moulage avec déformation de la bande 202 pour reproduire le profil incurvé de la pale de l'aube et déformation des plateaux 240, 250 pour reproduire des formes semblables à celles de la plateforme et du talon de l'aube, comme le montre la figure 7. On obtient ainsi une préforme avec une partie 320 de préforme de pale, une partie 330 de préforme de pied (avec préforme d'échasse) et des parties 340, 350 de préforme de plateforme et de préforme de talon.

Un mode de tissage tridimensionnel de l'ébauche fibreuse 200 sera maintenant décrit plus en détail.

Il est supposé que le tissage est réalisé avec des fils de chaîne s'étendant dans la direction longitudinale X de l'ébauche, étant noté qu'un tissage avec des fils de trame dans cette direction est également possible.

La variation d'épaisseur de la bande 202 sur sa largeur est obtenue en utilisant des fils de chaîne de titre variable. On peut en variante ou en complément faire varier la contexture des fils de chaîne (nombre de fils par unité de longueur en sens trame), une contexture plus faible autorisant un amincissement plus important lors de la mise en forme de la préforme par moulage.

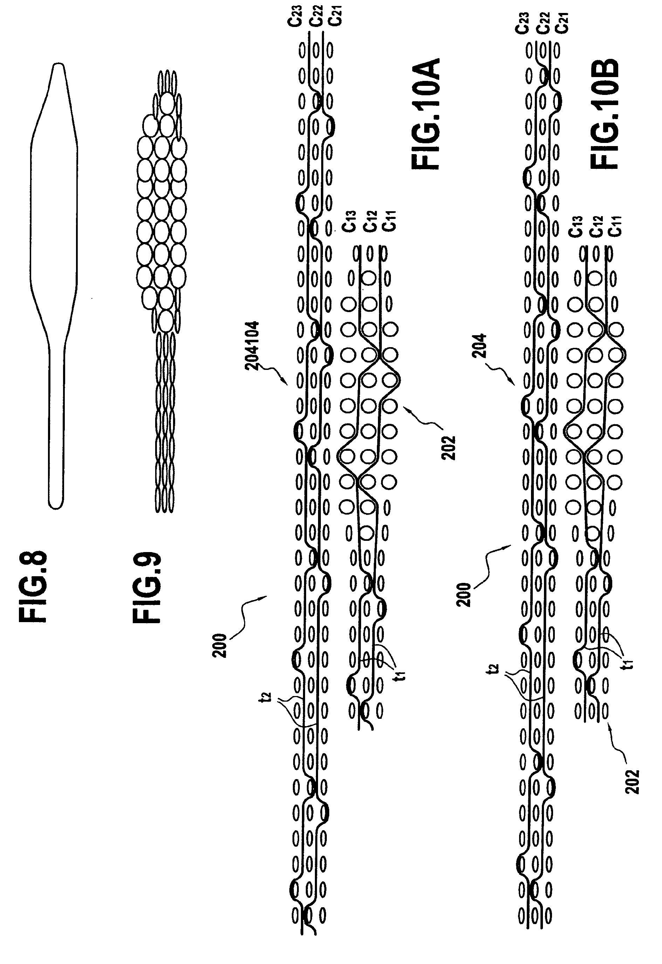

Ainsi, pour obtenir un profil de pale d'aube tel que représenté en projection à plat sur la figure 8, on peut utiliser 3 couches de fils de chaîne de titre et de contexture variables comme illustré par la figure 9.

Dans un exemple de réalisation, les fils utilisés peuvent être des fils de carbure de silicium (SiC) fournis sous la dénomination "Nicalon" par la société japonaise Nippon Carbon et ayant un titre (nombre de filaments) de 0,5K (500 filaments). On forme la chaîne avec des fils SiC de 0,5K et des fils SiC de 1K obtenus par la réunion de deux fils de 0,5K, les deux fils étant réunis par guipage. Le guipage est réalisé avantageusement avec un fil à caractère fugace susceptible d'être éliminé après tissage, par exemple un fil en alcool polyvinylique (PVA) éliminable par dissolution dans l'eau.

Le tableau I ci-dessous donne, pour chaque colonne de fils de chaîne, la contexture (nombre de fils/cm dans la longueur du profil), le nombre de fils 0,5K, le nombre de fils 1K et l'épaisseur de profil en mm, celle-ci variant ici entre 1 mm et 2,5 mm environ :

**Tableau I**

| Colonne | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|
| Contexture | 6 | 6 | 6 | 6 | 6 | 6 | 6 | 8 | 8 | 8 | 8 | 8 | 8 | 8 | 8 | 8 | 8 | 8 | 6 |
| Nb fils 0,5K | 3 | 3 | 3 | 3 | 3 | 3 | 3 | 2 | 1 | 0 | 0 | 0 | 0 | 0 | 0 | 0 | 2 | 1 | 3 |
| Nb fils 2x0,5K | 0 | 0 | 0 | 0 | 0 | 0 | 0 | 1 | 2 | 3 | 3 | 3 | 3 | 3 | 3 | 3 | 1 | 2 | 0 |
| Epaisseur | 1 | 1 | 1 | 1 | 1 | 1 | 1,2 | 1,5 | 2 | 2,2 | 2,4 | 2,5 | 2,4 | 2,4 | 2,2 | 2,1 | 1,8 | 1,5 | 1,2 |

Bien entendu, selon les titres de fils disponibles, différentes combinaisons de nombres de couches de fils et de variations de contexture et de titre pourront être adoptées pour le profil à obtenir.

Les figures 10A, 10B montrent, en coupe chaîne, deux plans successifs d'une armure pouvant être utilisée pour le tissage de l'ébauche fibreuse 200 hors la surépaisseur 203.

La bande 202 de l'ébauche fibreuse 200 comprend un ensemble de couches de fils de chaîne, le nombre de couches étant ici par exemple égal à 3 (couches C₁₁, C₁₂, C₁₃). Les fils de chaîne sont liés par des fils de trame t₁ par tissage tridimensionnel.

La bande 204 comprend aussi un ensemble de couches de fils de chaîne par exemple également égal à 3 (couches C₂₁, C₂₂, C₂₃) liés par des fils de trame t₂ par tissage tridimensionnel, comme la bande 202.

On note que les fils de trame t₁ ne s'étendent pas dans les couches de fils de chaîne de la bande 204 et que les fils de trame t₂ ne s'étendent pas dans les couches de fils de chaîne de la bande 202 afin d'assurer une déliaison.

Dans l'exemple illustré, le tissage est un tissage multicouches réalisé avec une armure de type satin, ou multi-satin. D'autres types de tissage tridimensionnel pourront être utilisés, par exemple un tissage multicouche à armure multi-toile ou un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure. Différents modes de tissage tridimensionnel sont notamment décrits dans le document WO 2006/136755 dont le contenu est incorporé ici par voie de référence.

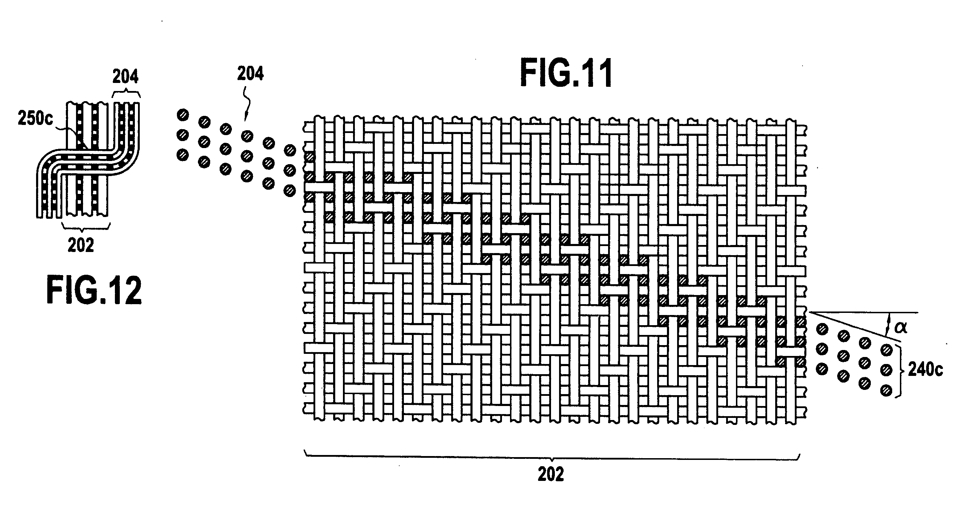

La figure 11 est une vue en coupe parallèlement aux sens chaîne et trame au niveau de la traversée de la bande 202 par la partie de raccordement 240c de la bande 204, les fils de chaîne de cette partie de raccordement étant vus en coupe. Chaque couche de fils de chaîne s'étend, dans cette partie de raccordement 240c, dans une direction faisant un angle α par rapport à la direction trame de la bande 202. Le passage de la bande 204 d'un côté à l'autre de la bande 202 est réalisé, lors du tissage, en faisant traverser l'ensemble des fils de chaîne et de trame de la bande 202 par chaque fil de chaîne de la bande 204, individuellement.

La figure 12 est une vue en coupe trame au niveau de la traversée de la bande 202 par la partie de raccordement 250c de la bande 204. Dans l'exemple illustré, comme déjà indiqué, la partie de raccordement 250c s'étend perpendiculairement à la direction chaîne de la bande 202. Toutefois, comme pour la partie de raccordement 240c on pourra avoir une partie de raccordement 250c qui s'étend en faisant un angle non nul par rapport à la normale à la direction chaîne, selon l'orientation désirée du talon.

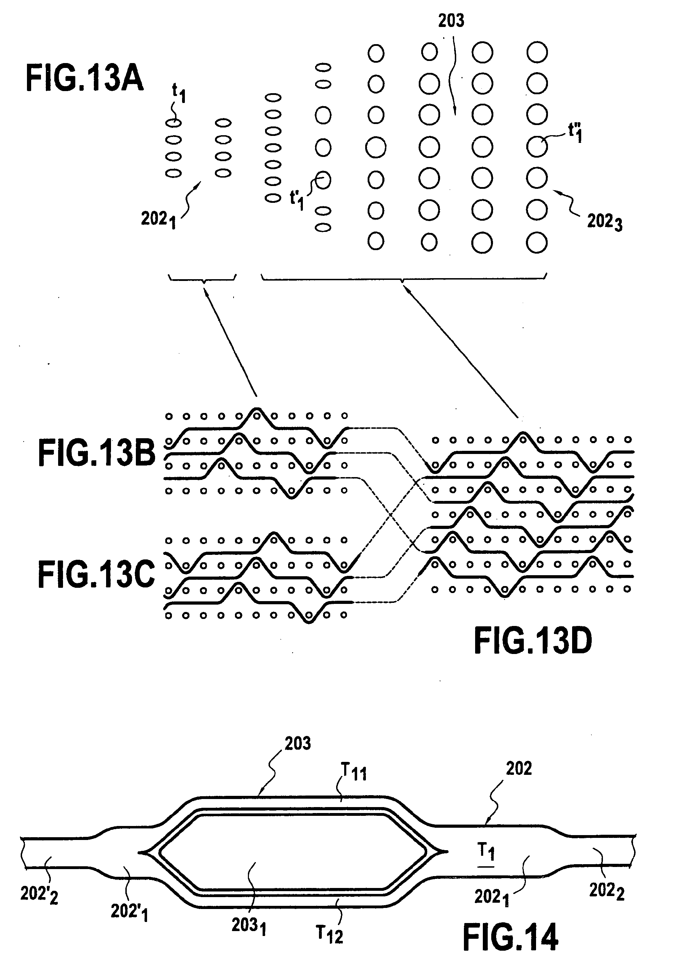

La surépaisseur 203 peut être obtenue en utilisant des fils de trame de plus gros titre et des couches supplémentaires de fils de trame, comme le montre par exemple la figure 13A.

Sur la figure 13A, le nombre de couches de fils de trame passe dans cet exemple de 4 à 7 entre une partie d'ébauche fibreuse 202₁ de la bande 202, correspondant à l'échasse de l'aube et la partie d'ébauche fibreuse 202₃ de la bande 202 présentant la surépaisseur 203.

En outre, des fils de trame t₁, t'₁, t"₁ de titres différents sont utilisés, les fils t₁ étant par exemple des fils de SiC "Nicalon" de titre 0,5K (500 filaments), les fils t'₁ étant obtenus par la réunion de 2 fils de 0,5K et les fils t"₁ par la réunion de 3 fils de 0,5K.

Le tissage dans la partie d'ébauche 202₃ nécessite des couches de fils de chaîne en plus grand nombre que dans la partie 202₁. Cela est avantageusement réalisé lors de la transition entre la partie 202₁ et la partie 202₃ en diminuant le nombre de plans de chaîne en constituant chaque plan de chaîne dans la partie 202₃ par la réunion des fils de chaîne de deux plans de chaîne dans la partie 202₁. Les figures 13B et 13C montrent deux plans de chaîne voisins dans la partie 202₁ et la figure 13D montre un plan de chaîne obtenu dans la partie 202₃ par la réunion des plans de chaîne des figures 13B et 13C. Sur les figures 13B, 13C et 13D, on n'a pas montré les titres différents des fils de chaîne (comme montré sur la figure 9) ou des fils de trame (comme montré sur la figure 13A) par souci de simplicité. Entre les figures 13B, 13C, d'une part, et la figure 13D, d'autre part, les tirets montrent comment les fils de chaîne des différentes couches dans les figures 13B, 13C forment les couches de fils de chaîne de la figure 13D.

Bien entendu, différentes combinaisons de nombres de couches de trame et de titres de fils de trame pourront être adoptées pour former la surépaisseur 203.

Selon un autre mode de réalisation montré schématiquement sur la figure 14, la surépaisseur 203 peut être obtenue en introduisant un insert lors du tissage de la bande 202.

Sur la figure 14, l'ensemble T₁ de couches de fils de trame de la partie 202₁ de la bande 202 correspondant à l'échasse de l'aube est divisé par déliaison lors du tissage en deux sous-ensembles T₁₁, T₁₂ entre lesquels un insert 203₁ est introduit. Dans l'exemple illustré, la partie 202₁ a une épaisseur plus importante que celle de la partie 202₂ de la bande 202 correspondant à la pale de l'aube. La transition entre la partie 202₂ et la partie 202₁ pourra être réalisée de la même manière que décrit plus haut pour la transition entre les parties 202₁ et 202₃ de la figure 13A. La traversée de la bande 202 par la bande 204 au niveau de la partie de raccordement 240c de la figure 4 pourra éventuellement être réalisée à travers la partie 202₁ de plus forte épaisseur.

A l'extrémité de l'insert 203, opposée à la partie 202₁, les sous-ensembles T₁₁, T₁₂ de couches de fils de trame sont à nouveau réunis par tissage pour former une partie 202'₁ de même épaisseur que la partie 202₁, puis, par réduction d'épaisseur, une partie 202'₂ de même épaisseur que la partie 202₂, la partie 202'₂ formant la partie correspondant à une pale d'aube pour l'ébauche suivante tissée.

L'insert 203₁ est de préférence en céramique monolithique, de préférence le même matériau céramique que celui de la matrice du matériau composite de l'aube à fabriquer. Ainsi, l'insert 203₁ peut être un bloc de SiC obtenu par frittage de poudre SiC.

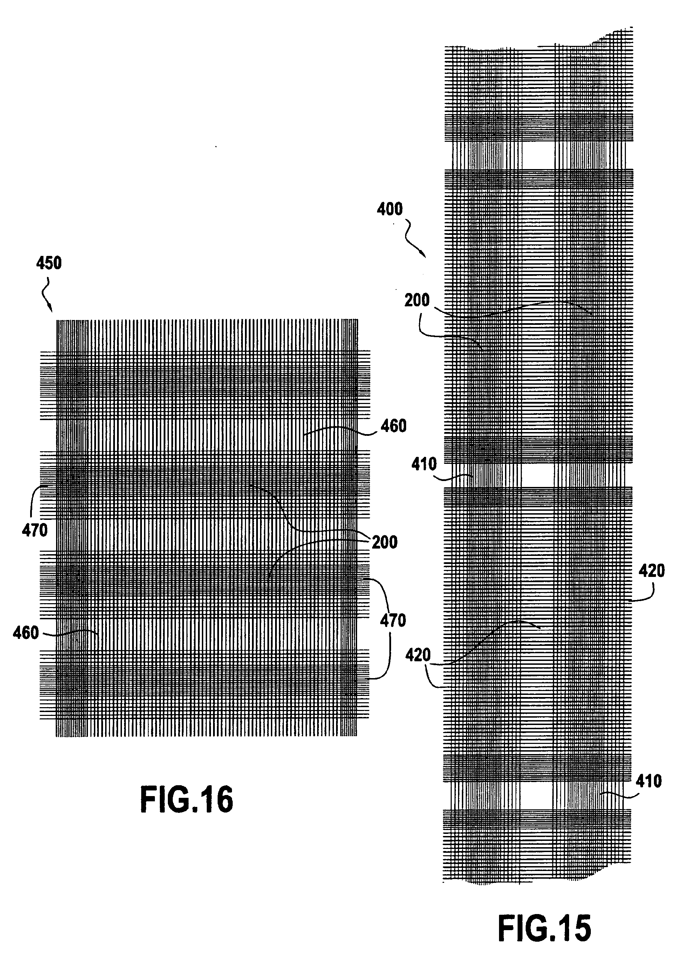

Comme le montre très schématiquement la figure 15, une pluralité d'ébauches fibreuses 200 sont obtenues par tissage d'une bande 400 dans laquelle sont formées une ou plusieurs rangées d'ébauches fibreuses successives. Des zones de sur-longueurs 410, 420 sont ménagées en sens chaîne (uniquement fils de chaîne) et en sens trame (uniquement fils de trame) pour éviter des phénomènes de bord liés au tissage, laisser une plus grande liberté de déformation lors de la mise en forme de la préforme et aménager des zones de transition entre ébauches 200.

La figure 16 montre une variante de réalisation selon laquelle une bande 450 est réalisée avec une rangée d'ébauches 200 tissées en sens trame perpendiculairement à la direction longitudinale de la bande. Des zones de sur-longueurs 460, 470 sont également ménagées en sens chaîne et en sens trame. Plusieurs rangées d'ébauches 200 peuvent être tissées, la largeur de la bande 450 étant adaptée à cet effet.

Les étapes de traitement de surface des fibres, formation d'une première couche de revêtement d'interphase, imprégnation par composition de consolidation et pré-réticulation du procédé selon le mode de réalisation de la figure 1 sont réalisées avant découpe des ébauches dans la bande 400 ou 450.

Après découpe, des étapes de mise en forme de chaque ébauche dans un moule, réticulation de la résine de consolidation, pyrolyse de la résine réticulée, formation d'une couche supplémentaire de revêtement d'interphase et de densification en plusieurs cycles avec usinage intermédiaire sont réalisées comme décrit en référence à la figure 1.

On pourrait, en variante utiliser le mode de réalisation de la figure 2.

L'on a décrit ci-avant un exemple détaillé de mise en oeuvre du procédé pour la fabrication d'aubes de turbomachine à plate-forme et/ou talon intégrés. Le procédé peut être utilisé pour la fabrication d'aubes sans plate-forme ou talon, la plate-forme étant par exemple rapportée. Dans ce dernier cas, la réalisation de l'ébauche fibreuse peut être simplifiée en se limitant à la bande fibreuse 202.

### Exemple 2 : Fabrication de volets chauds de tuyère de moteur d'avion à turbine à gaz à post-combustion.

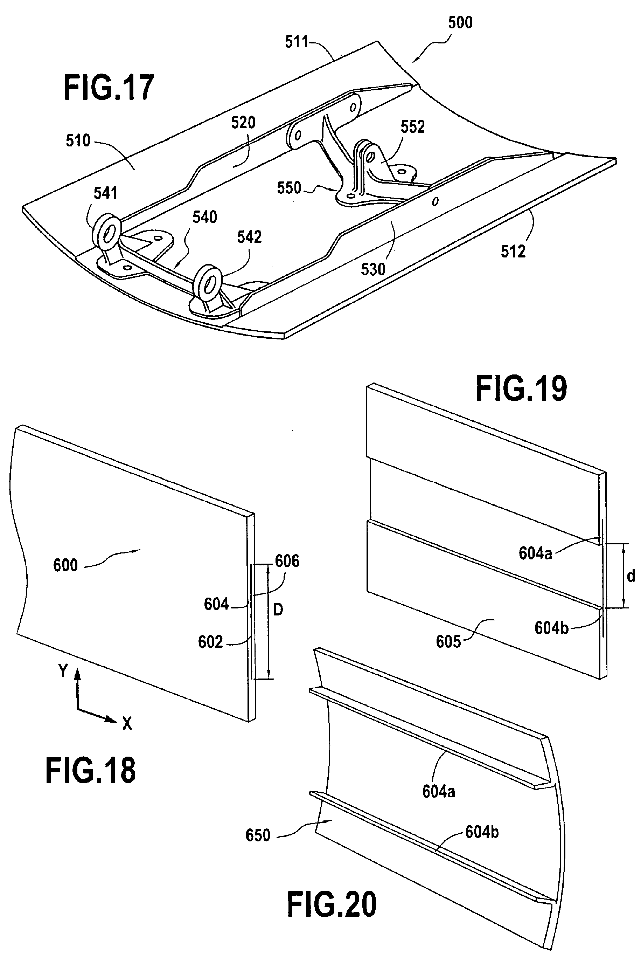

La figure 17 montre un volet 500 orientable tel qu'utilisé pour une tuyère à section variable dans un canal d'éjection d'un moteur à turbine à post-combustion.

Le volet 500 comprend un corps de volet 510 ayant une forme générale de secteur cylindrique s'étendant entre deux bords longitudinaux 511, 512. Des nervures de raidissement 520, 530 sont formées à la face concave du volet 500. A une extrémité longitudinale 501 du volet, une platine 540 est fixée sur la face concave du volet, entre les nervures 520, 530, la platine 540 supportant des oeillets 541, 542 pour le passage d'un axe (non montré) d'articulation du volet 500. Une autre platine 550 est fixée sur la face concave du volet et sur les nervures 520, 530. La platine 550 se situe entre les nervures 520, 530 à distance de l'extrémité 501 et porte une pièce 552 de liaison articulée avec un actionneur (non représenté) commandant la position angulaire du volet. Le corps de volet 510 forme une seule pièce en matériau CMC avec les nervures 520, 530 tandis que les platines 540, 550 sont par exemple en matériau métallique réfractaire.

La figure 18 montre très schématiquement une ébauche fibreuse 600 à partir de laquelle une préforme fibreuse de corps de volet peut être mise en forme afin, après densification par une matrice et usinage, d'obtenir un corps de volet tel que celui 510 illustré par la figure 17.

L'ébauche 600 est sous forme de bande de direction longitudinale X, la bande ayant une largeur choisie en fonction de la largeur développée à plat du corps de volet 510 à fabriquer. L'ébauche 600 est d'épaisseur sensiblement constante déterminée en fonction de l'épaisseur du volet à fabriquer. Une seule ébauche 600 est montrée sur la figure 18 étant noté qu'une succession de telles ébauches sont tissées sous forme d'une bande fibreuse continue. L'ébauche 600 est réalisée avec une pluralité de couches de fils supersposées et liées par tissage 3D. La liaison entre les couches de fils est réalisée sur toute l'épaisseur de l'ébauche sauf dans une zone 602 qui s'étend longitudinalement sur une distance D choisie en fonction de la distance en projection à plat entre les nervures 520, 530 du corps de volet 510 à fabriquer. La zone de déliaison 602 s'étend sensiblement à mi-épaisseur de l'ébauche 600, les ensembles de couches de fils 604, 606 de part et d'autre de la zone de déliaison 602 n'étant pas liées mutuellement sur la longueur de cette zone.

Les figures 19 et 20 montrent schématiquement comment une préforme fibreuse ayant une forme proche de celle du corps de volet 510 à fabriquer peut être obtenue à partir de l'ébauche fibreuse 600.

On conserve, dans la direction X, une dimension de l'ébauche 600 choisie en fonction de la longueur du corps de volet 510 à fabriquer.

A partir d'une des faces 605 de l'ébauche fibreuse, une partie de l'ensemble de couches de fils 604 est retirée par découpe, cette partie s'étendant parallèlement à la direction X sur toute la longueur de l'ébauche fibreuse. La partie retirée a une épaisseur allant jusqu'à la zone de déliaison 602. Dans la direction Y perpendiculaire à X, la partie retirée a une dimension d inférieure à D de manière à laisser subsister des parties 604a, 604b de l'ensemble de couches de fils 604 qui s'étendent dans la direction Y sur une longueur choisie en fonction de la largeur des nervures 520, 530 du corps de volet 510 à fabriquer (figure 19).

Une préforme fibreuse 650 du corps de volet 510 à fabriquer est ensuite obtenue par moulage avec déformation pour reproduire le profil incurvé du corps de volet et rabat des parties 604a 604b pour obtenir des parties de préforme des nervures 520, 530 du corps de volet (figure 20).

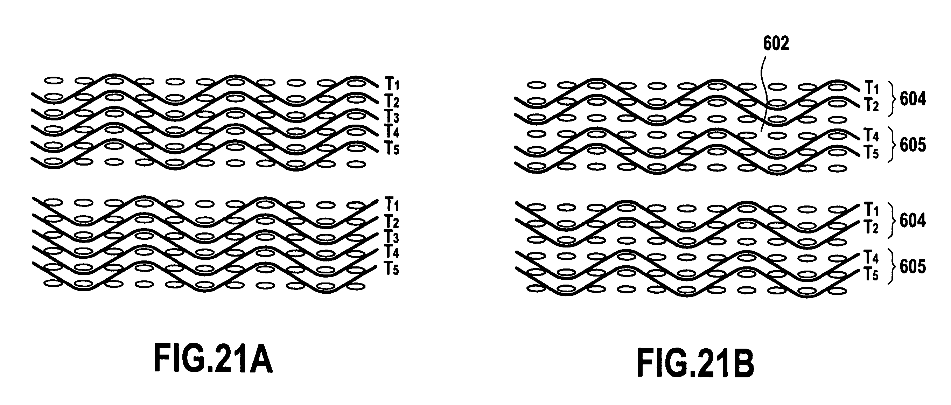

Un mode de tissage 3D de l'ébauche 600 est montré schématiquement par les figures 21A et 21B. La figure 21A est une vue partielle agrandie de deux plans en coupe chaîne successifs dans une partie de l'ébauche 600 ne présentant pas de déliaison tandis que la figure 21B montre deux plans en coupe chaîne successifs dans la partie de l'ébauche 600 présentant la déliaison 602.

Dans cet exemple, l'ébauche 600 comprend 6 couches de fils de chaîne s'étendant dans la direction X. Sur la figure 21A, les 6 couches de fils de chaîne sont liés par des fils de trame T₁ à T₅, l'armure étant de type interlock. Sur la figure 21B, 3 couches de fils de chaîne formant l'ensemble de couches de fils 604 sont liées entre elles par deux fils de trame T₁, T₂, de même que les 3 couches de fils de chaîne formant l'ensemble de couches de fils 605 sont liés par deux fils de trame T₄ et T₅. La déliaison 602 sépare l'un de l'autre les ensembles de couches de fils de chaîne 604, 605.

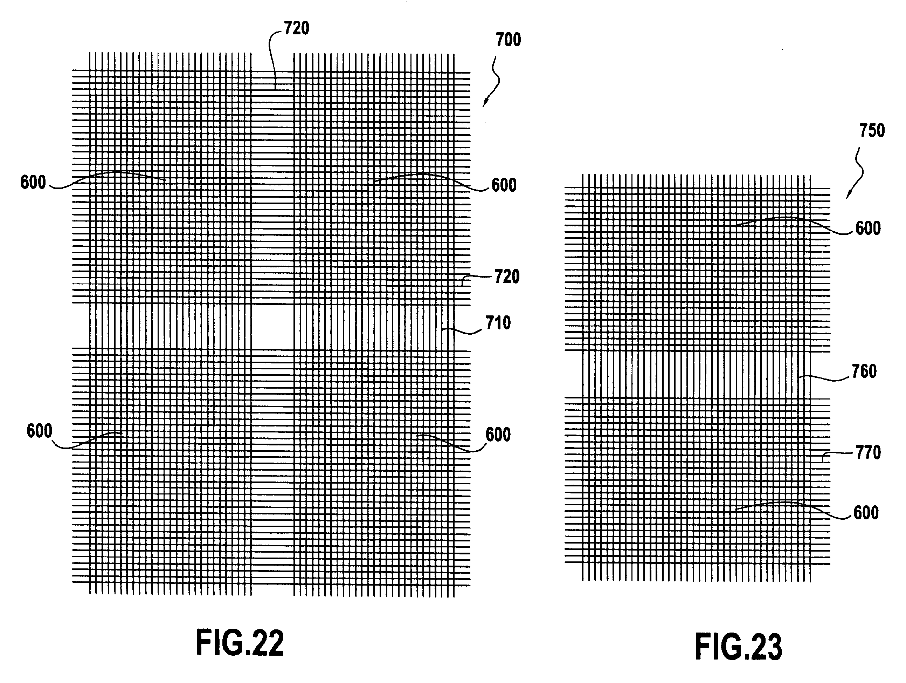

Comme le montre très schématiquement la figure 22, une pluralité d'ébauches fibreuses 600 sont obtenues par tissage d'une bande 700 dans laquelle sont formées une ou plusieurs rangées d'ébauches successives. Des zones de sur-longueurs 710, 720 sont ménagées en sens chaîne (uniquement fils de chaîne) et en sens trame (uniquement fils de trame) pour éviter des phénomènes de bord liés au tissage, laisser une plus grande liberté de déformation lors de la réalisation des préformes et aménager des zones de transition entre ébauches 600.

La figure 23 montre une variante de réalisation selon laquelle une bande 750 est réalisée avec une rangée d'ébauches 600 tissées en sens trame perpendiculairement à la direction longitudinale de la bande. Des zones de sur-longueurs 760, 770 sont également ménagées en sens chaîne et en sens trame. Plusieurs rangées d'ébauches 600 peuvent être tissées, la longueur de la bande 750 étant adaptée en conséquence.

Les étapes de traitement de surface des fibres, formation d'une première couche de revêtement d'interphase, imprégnation par composition de consolidation et pré-réticulation du procédé selon le mode de réalisation de la figure 1 sont réalisées avant découpe des ébauches 600 dans la bande 700 ou 750.

Après découpe, des étapes de mise en forme de chaque ébauche dans un moule, réticulation de la résine de consolidation, pyrolyse de la résine réticulée, formation d'une couche supplémentaire de revêtement d'interphase et de densification en plusieurs cycles avec usinage intermédiaire sont réalisées comme décrit en référence à la figure 1.

On pourrait bien entendu, en variante, utiliser le procédé selon le mode de réalisation de la figure 2.

## Revendications

1. Procédé de fabrication de pièce (110; 510) en matériau composite comprenant un renfort fibreux tissé tridimensionnel et densifié par une matrice, le procédé comportant les étapes de :
- tissage tridimensionnel d'une bande fibreuse continue (400 ; 450 ; 700 ; 750) comprenant une succession d'ébauches fibreuses (200 ; 600 de préformes d'une pluralité de pièces à fabriquer,
- découpe ensuite dans la bande d'ébauches fibreuses individuelles (200 : 600), chaque ébauche étant en une seule pièce,
- mise en forme d'une ébauche découpée pour obtenir une préforme fibreuse en une seule pièce (300 650) ayant une forme voisine de celle d'une pièce à fabriquer,
- consolidation de la préforme dans la forme voulue, et
- densification de la préforme consolidée par formation d'une matrice par infiltration chimique en phase gazeuse.

2. Procédé selon la revendication 1, **caractérisé en ce qu'**un traitement de surface est réalisé sur les fibres de la bande fibreuse tissée (400 ; 450 ; 700 ; 750) comprenant au moins l'une des opérations suivantes : désensimage des fibres et élimination de l'oxyde par traitement acide des fibres.

3. Procédé selon la revendication 1, **caractérisé en ce que**, avant découpe des ébauches fibreuses individuelles (200 ; 600), la bande fibreuse tissée (400 ; 450 ; 700 ; 750) est imprégnée par une composition liquide de consolidation comprenant une résine et la consolidation est effectuée par réticulation et pyrolyse de la résine.

4. Procédé selon la revendication 3, **caractérisé en ce que**, avant imprégnation par la composition de consolidation, une couche d'interphase fibres-matrice est formée sur les fibres de la bande fibreuse tissée, la couche d'interphase étant en un matériau choisi parmi le carbone pyrolytique PyC, le nitrure de bore BN et le carbone dopé au bore BC.

5. Procédé selon la revendication 4, **caractérisé en ce que** la couche d'interphase a une épaisseur au plus égale à 100 nanomètres.

6. Procédé selon l'une quelconque des revendications 4 et 5, **caractérisé en ce qu'**après obtention de la préforme consolidée et avant densification par la matrice, une couche supplémentaire d'interphase fibres-matrice est formée.

7. Procédé selon la revendication 6, **caractérisé en ce que** la couche supplémentaire d'interphase est réalisée par infiltration chimique en phase gazeuse et **en ce que** la formation de la couche supplémentaire d'interphase et la densification sont réalisées de façon enchaînée dans un four.

8. Procédé selon l'une quelconque des revendications 3 à 7, **caractérisé en ce qu'**après imprégnation par la composition de consolidation et avant découpe des ébauches, une pré-réticulation de la résine de consolidation est réalisée.

9. Procédé selon l'une quelconque des revendications 3 à 8, **caractérisé en ce que** la mise en forme de l'ébauche fibreuse est réalisée dans un moule dans lequel la réticulation et la pyrolyse de la résine de consolidation sont réalisées de façon enchaînée.

10. Procédé selon l'une quelconque des revendications 3 à 8, **caractérisé en ce que** la pyrolyse de la résine est réalisée lors d'une montée en température effectuée en vue d'une opération d'infiltration chimique en phase gazeuse.

11. Procédé selon la revendication 1, **caractérisé en ce que** la consolidation est effectuée par densification partielle par infiltration chimique en phase gazeuse de la préforme maintenue dans la forme voulue.

12. Procédé selon la revendication 11, **caractérisé en ce que**, après mise en forme et avant consolidation, un revêtement d'interphase fibres-matrice est formé sur les fibres de la préforme, le revêtement d'interphase étant en un matériau choisi parmi le carbone pyrolytique PyC, le nitrure de bore BN et le carbone dopé au bore BC.

13. Procédé selon l'une quelconque des revendications 1 à 12, **caractérisé en ce que** la densification comprend deux étapes séparées par une opération d'usinage de la préforme partiellement densifiée.

14. Procédé selon l'une quelconque des revendications 1 à 13, **caractérisé en ce que** la bande tissée 400 ; 700) comprend plusieurs rangées d'ébauches fibreuses qui s'étendent dans la direction longitudinale de la bande.

15. Procédé selon l'une quelconque des revendications 1 à 14, **caractérisé en ce que** la bande (400 : 700) est tissée avec des zones de sur-longueur en chaîne et en trame tout autour des ébauches fibreuses.

16. Procédé selon l'une quelconque des revendications 1 à 15 pour la fabrication d'aube de turbomachine (110) dans lequel la bande continue est tissée avec une succession d'ébauches fibreuses 200 aptes, après mise en forme, à constituer des préformes fibreuses (300)_qui constituent chacune une préforme en une seule pièce d'au moins une pale et un pied d'aube, les ébauches fibreuses étant tissées avec leur direction longitudinale correspondant à celle des aubes à fabriquer s'étendant en sens trame ou en sens chaîne.

## Claims

1. A method of fabricating a part (110; 510) out of composite material comprising three-dimensional woven fiber reinforcement densified by a matrix, the invention comprising the steps of:
· three-dimensionally weaving a continuous fiber strip (400 ; 450 ; 700 ; 750) comprising a succession of fiber blanks (200 ; 600) for preforms of a plurality of parts that are to be fabricated;
· subsequently cutting individual fiber blanks (200 ; 600) out from the strip, each blank being a one-piece blank;
· shaping a cut-out blank to obtain a one-piece fiber preform (300 ; 650) having a shape that is close to the shape of a part that is to be fabricated;
· consolidating the preform in the desired shape; and
. densifying the consolidated preform by forming a matrix by chemical vapor infiltration.

2. A method according to claim 1, **characterized in that** a surface treatment is carried out on the fibers of the woven fiber strip (400 ; 450 ; 700 ; 750) comprising at least one of the following processings: elimination of sizing present on the fibers and oxide elimination by acid treatment.

3. A method according to claim 1, **characterized in that** prior to cutting out the individual fiber blanks (200 ; 600), the woven fiber strip (400 ; 450 ; 700 ; 750) is impregnated by a consolidation liquid composition comprising a resin, and consolidation is performed by curing and pyrolyzing the resin.

4. A method according to claim 3, **characterized in that** prior to impregnating with the consolidation composition, a fiber-matrix interphase layer is formed on the fibers of the woven fiber strip, the interphase layer being made of a material selected from pyrolytic carbon (PyC), boron nitride (BN), and boron-doped carbon (BC).

5. A method according to claim 4, **characterized in that** the interphase layer has a thickness of no more than 100 nm.

6. A method according to claim 4 or claim 5, **characterized in that** after obtaining the consolidated preform and prior to densifying it with the matrix, an additional fiber-matrix interphase layer is formed.

7. A method according to claim 6, **characterized in that** the additional interphase layer is made by chemical vapor infiltration, and **in that** the forming of the additional interphase layer and the densification are performed one after the other in an oven.

8. A method according to any one of claims 3 to 7, **characterized in that** after impregnation with the consolidation composition and before cutting out the blanks, the consolidation resin is subjected to precuring.

9. A method according to any one of claims 3 to 8, **characterized in that** the fiber blank is shaped in a mold in which curing and pyrolysis of the consolidation resin are performed one after the other.

10. A method according to any one of claims 3 to 8, **characterized in that** the resin is pyrolyzed during a temperature rise that is performed in preparation for an operation of chemical vapor infiltration.

11. A method according to claim 1, **characterized in that** the consolidation is performed by partial densification of the preform by chemical vapor infiltration while the preform is held in the desired shape.

12. A method according to claim 11, **characterized in that** after shaping and before consolidation, a fiber-matrix interphase coating is formed on the fibers of the preform, the interphase coating being made of a material selected from pyrolytic carbon (PyC), boron nitride (BN), and boron-doped carbon (BC).

13. A method according to any one of claims 1 to 12, **characterized in that** the densification comprises two steps separated by an operation of machining the partially densified preform.

14. A method according to any one of claims 1 to 13, **characterized in that** the woven strip (400 ; 700) comprises a plurality of rows of fiber blank that extend in the longitudinal direction of the strip.

15. A method according to any one of claims 1 to 14, **characterized in that** the strip (400 ; 700) is woven with zones of extra length in the warp and weft directions all around the fiber blanks.

16. A method according to any one of claims 1 to 15, for fabricating a turbomachine blade (110), wherein the continuous strip is woven with a succession of fiber blanks (200) that are suitable, after being shaped, for constituting fiber preforms (300), each constituting a one-piece preform for at least an airfoil and a root of a blade, the fiber blanks being woven with their longitudinal direction, which corresponds to the longitudinal direction of the blades that are to be fabricated, extending in the weft direction or in the warp direction.

## Patentansprüche

1. Verfahren zur Herstellung eines Teils (110; 510) aus Verbundwerkstoff, umfassend eine dreidimensionale und durch eine Matrix verdichtete gewebte Faserverstärkung, wobei das Verfahren die Schritte umfaßt:
- dreidimensionales Weben einer durchgehenden Faserbahn (400; 450; 700; 750), die eine Folge von Faserrohlingen (200; 600) von Vorformlingen einer Vielzahl von herzustellenden Teilen umfaßt,
- anschließendes Ausschneiden von einzelnen Faserrohlingen (200; 600) aus der Bahn, wobei jeder Rohling einstückig ist,
- Formen eines ausgeschnittenen Rohlings, um einen einstückigen Faservorformling (300; 650) zu erhalten, der eine Form nahe derjenigen eines herzustellenden Teils aufweist,
- Verfestigen des Vorformlings in der gewünschten Form und
- Verdichten des verfestigten Vorformlings durch Ausbilden einer Matrix mittels chemischer Gasphaseninfiltration.

2. Verfahren nach Anspruch 1, **dadurch gekennzeichnet, daß** an den Fasern der gewebten Faserbahn (400; 450; 700; 750) eine Oberflächenbehandlung durchgeführt wird, die wenigstens einen der folgenden Arbeitsschritte umfaßt: Entschlichten der Fasern und Entfernen des Oxids durch Säurebehandlung der Fasern.

3. Verfahren nach Anspruch 1, **dadurch gekennzeichnet, daß** vor dem Ausschneiden der einzelnen Faserrohlinge (200; 600) die gewebte Faserbahn (400; 450; 700; 750) mit einer ein Harz umfassenden flüssigen Verfestigungszusammensetzung imprägniert wird und die Verfestigung durch Vernetzen und Pyrolyse des Harzes vollzogen wird.

4. Verfahren nach Anspruch 3, **dadurch gekennzeichnet, daß** vor dem Imprägnieren mit der Verfestigungszusammensetzung eine Faser-Matrix-Zwischenphasenschicht auf den Fasern der gewebten Faserbahn ausgebildet wird, wobei die Zwischenphasenschicht aus einem Material besteht, das aus pyrolytischem Kohlenstoff PyC, Bornitrid BN und mit Bor dotiertem Kohlenstoff BC ausgewählt ist.

5. Verfahren nach Anspruch 4, **dadurch gekennzeichnet, daß** die Zwischenphasenschicht eine Dicke von höchstens gleich 100 Nanometern aufweist.

6. Verfahren nach einem der Ansprüche 4 und 5, **dadurch gekennzeichnet, daß** nach Erhalt des verfestigten Vorformlings und vor Verdichten durch die Matrix eine zusätzliche Faser-Matrix-Zwischenphasenschicht ausgebildet wird.

7. Verfahren nach Anspruch 6, **dadurch gekennzeichnet, daß** die zusätzliche Zwischenphasenschicht durch chemische Gasphaseninfiltration gebildet wird und daß die Ausbildung der zusätzlichen Zwischenphasenschicht und die Verdichtung in einem Ofen aufeinanderfolgend durchgeführt werden.

8. Verfahren nach einem der Ansprüche 3 bis 7, **dadurch gekennzeichnet, daß** nach Imprägnieren mit der Verfestigungszusammensetzung und vor Ausschneiden der Rohlinge eine Vorvernetzung des Verfestigungsharzes durchgeführt wird.

9. Verfahren nach einem der Ansprüche 3 bis 8, **dadurch gekennzeichnet, daß** die Formung des Faserrohlings in einer Form vollzogen wird, in der die Vernetzung und die Pyrolyse des Verfestigungsharzes aufeinanderfolgend durchgeführt werden.

10. Verfahren nach einem der Ansprüche 3 bis 8, **dadurch gekennzeichnet, daß** die Pyrolyse des Harzes bei einer im Hinblick auf einen Vorgang zur chemischen Gasphaseninfiltration vollzogenen Temperaturerhöhung durchgeführt wird.

11. Verfahren nach Anspruch 1, **dadurch gekennzeichnet, daß** die Verfestigung durch Teilverdichtung mittels chemischer Gasphaseninfiltration des in der gewünschten Form gehaltenen Vorformlings vollzogen wird.

12. Verfahren nach Anspruch 11, **dadurch gekennzeichnet, daß** nach der Formung und vor der Verfestigung eine Faser-Matrix-Zwischenphasenbeschichtung auf den Fasern des Vorformlings ausgebildet wird, wobei die Zwischenphasenbeschichtung aus einem Material besteht, das aus pyrolytischem Kohlenstoff PyC, Bornitrid BN und mit Bor dotiertem Kohlenstoff BC ausgewählt ist.

13. Verfahren nach einem der Ansprüche 1 bis 12, **dadurch gekennzeichnet, daß** die Verdichtung zwei Schritte umfaßt, die durch einen Vorgang zur Bearbeitung des teilverdichteten Vorformlings getrennt sind.

14. Verfahren nach einem der Ansprüche 1 bis 13, **dadurch gekennzeichnet, daß** die gewebte Bahn (400; 700) mehrere Reihen von Faserrohlingen, die in der Längsrichtung der Bahn verlaufen, umfaßt.

15. Verfahren nach einem der Ansprüche 1 bis 14, **dadurch gekennzeichnet, daß** die Bahn (400; 700) mit in Kette und in Schuß überlangen Bereichen um die Faserrohlinge gewebt ist.

16. Verfahren nach einem der Ansprüche 1 bis 15 für die Herstellung einer Turbomaschinenschaufel (110), wobei die durchgehende Bahn mit einer Folge von Faserrohlingen (200) gewebt ist, die nach der Formung geeignet sind, Faservorformlinge (300) zu bilden, welche jeweils einen einstückigen Vorformling wenigstens eines Blattes und eines Schaufelfußes bilden, wobei die Längsrichtung der gewebten Faserrohlinge derjenigen der herzustellenden Schaufeln, die in Schußrichtung oder in Kettrichtung verläuft, entspricht.
